Europäisches Patentamt

**European Patent Office**

**Office européen des brevets**

(19)

(11) Publication number: **0 012 026**
**B1**

(12)     **EUROPEAN PATENT SPECIFICATION**

(45) Date of publication of patent specification: **22.12.82**

(21) Application number: **79302738.4**

(22) Date of filing: **30.11.79**

(51) Int. Cl.³: **B 65 D 81/34,**
B 32 B 31/28, C 08 J 7/10
**B 29 D 7/22**

(54) A method of making a heat-sealed food package.

(30) Priority: **30.11.78 GB 4663578**

(43) Date of publication of application:
**11.06.80 Bulletin 80/12.**

(45) Publication of the grant of the patent:
**22.12.82 Bulletin 82/51**

(84) Designated Contracting States:
**AT BE CH DE FR GB IT LU NL SE**

(56) References cited:
**DE - A - 1 629 772**
**DE - A - 1 704 445**
**DE - B - 1 239 847**
**FR - A - 1 152 595**
**FR - A - 1 219 648**
**FR - E - 64 192**

**PLASTICS ENGINEERING, vol. 32, no. 8, August
1978, pages 42—45 Greenwich, U.S.A.
A. BARLOW et al.: "Radiation curing works
best for PE films and wire coatings"**

(73) Proprietor: **BICC Limited**
**21, Bloomsbury Street**
**London, WC1B 3QN (GB)**

(72) Inventor: **Wills, Graham Boyce**
**70 Highview Road**
**Ealing, London, W13 (GB)**

(74) Representative: **Poole, Michael John et al.**
**BICC Limited Patents Department 38 Wood Lane**
**London, W12 7DX (GB)**

Courier Press, Leamington Spa, England.

A method of making a heat-sealed food package

This invention relates to packages made wholly or in part from coated paper board. It relates more specifically to food packages that are suitable for being exposed to heat, for example in an ordinary domestic oven, for the purpose of cooking the contents of the package.

It is well known that packaging materials made of or coated with thermoplastic polyethylene can be formed to shape and/or enclosed by heat-sealing, that is by pressing appropriate parts together under heat and pressure until a bond is formed. Such materials are, however, quite unsuitable for applications involving heating to temperatures above the softening point of the polyethylene.

It is also well known that the heat resistance of polyethylene can be increased by subjecting it to high energy irradiation, but this has the effect of making the material infusible, and it has hitherto been assumed that such irradiated materials could not be satisfactorily heat-sealed. DE—A 1629772, for example, teaches that to make heat-sealable irradiated plastics film it must be irradiated through only part of its thickness, leaving the unirradiated part to form the heat seal. This technique is not applicable to coated paper board since if the coating were irradiated from its exposed surface the unirradiated layer would not be accessible, whereas if irradiated from the other side the paper board would be damaged.

Surprisingly, we have now discovered that electron-irradiated polyethylene-coated paper board can be heat-sealed by pressing the parts together and heating to a temperature above the softening point of the polyethylene prior to cross-linking, and moreover that the bond so formed is surprisingly strong even at temperatures higher than at which the bond was formed.

In accordance with the invention, a method of making a food package comprises coating paper board on at least one side with polyethylene to a weight not greater than 100 g/m², irradiating the coating with electrons after coating to give a degree of cross-linking corresponding to irradiation of polyethylene without any sensitiser to a dose, averaged over the thickness of the coating, in the range 5—50 Mrad, forming the food package wholly or in part from the coated board, and in doing so forming a heat-seal after irradiation to bond together two coated areas of the board. Surprisingly, the food package that is so produced is capable of exposure to a radiant oven at 200°C for 30 minutes without leakage.

The heat-sealed seam or seams may close the package in a hermetically sealed fashion, or they may simply form the material of the package to the required shape, e.g. by securing a corner of an open topped tray.

Preferably the polyethylene is free of any additives, but radiation sensitisers and other additives may be present in the polyethylene provided they are suitable for use in contact with food.

Preferably the electrons impinging on the surface of the laminate have no more energy than is necessary (bearing in mind the angle of the incidence) to give an adequately uniform dose through the thickness of the coating, and a dose that is half as great at the polyethylene/board interface as at the surface can be considered adequate.

The use of high-energy electrons impinging on the laminate at glancing incidence is attractive as it offers the prospect of a high dose rate and consequently a high line speed; a particularly convenient arrangement is to inject a diverging electron beam into the open end of a parallel-sided or narrow V-shaped loop of the laminate, to give high-energy electrons at glancing incidence close to the source and low-energy scattered electrons at a larger angle of incidence further away from the source.

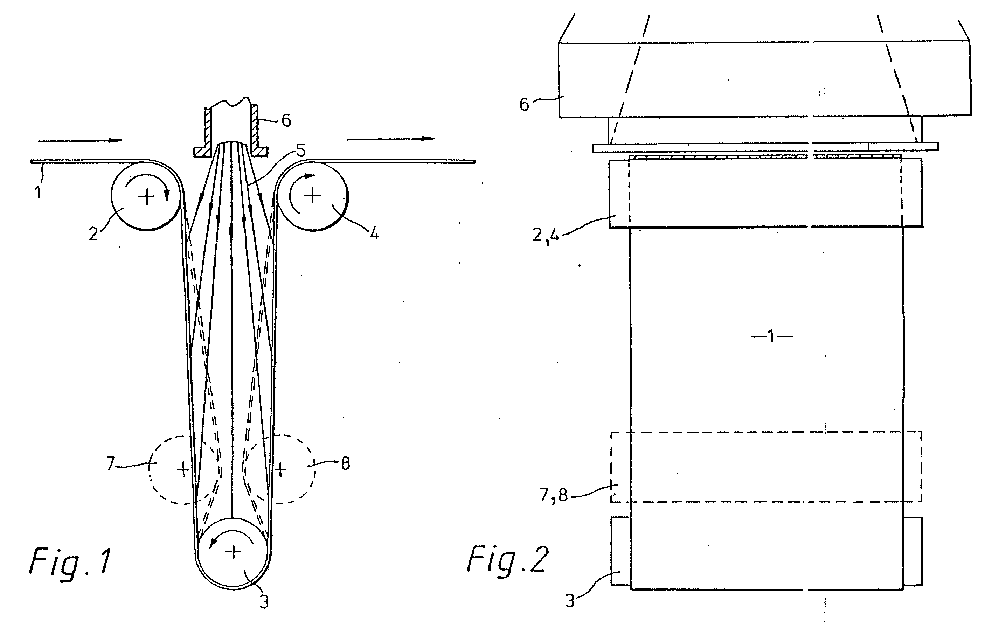

In the accompanying drawings figures 1 and 2 are mutually perpendicular views of irradiation apparatus of this kind, showing in broken lines an alternative form.

In the basic arrangement, paper board 1 with a coating of polyethylene on its upper surface is formed into a loop by guide rolls 2, 3 and 4, and a diverging beam of electrons 5 emerging from a linear curtain electron beam accelerator 6 is passed into the open end of the loop, and thereby falls on a large area of coating at a glancing incidence angle (which falls somewhat along the length of the loop).

In an alternative arrangement, two additional guide rolls 7 and 8 are used with the effect of making the angle of incidence larger but more uniform over the area of exposure.

Electrocurtain and scanning types of electron accelerator may be used, and the irradiation process may be in-line with the coating of the polyethylene on the board, or with the shaping of the food package, or with both of them.

Example

A paper board with a substance weight of 325 g/m² coated on one face with 23 g/m² of a commercial coating grade of polyethylene was cross-linked by electron irradiation to a dose of 20 Mrad for some samples and 30 Mrad for others. Comparison tests were made with the same material not exposed to radiation.

Samples cut from the respective materials were subject to a shear test, a peel test and to a practical cooking test.

Test procedures were as follows:—

Shear test

An air oven was thermostated at 200°C as indicated by a mercury-in-glass thermometer situated about 10 cm from the roof of the oven. A metal base plate, 450 g weight and loading former of dimensions 15×20 mm (used to define the bonding area) were left in contact with the base of the oven to equilibrate.

Section of the coated board 20 mm wide were cut and marked 15 mm from one end.

Two lengths of board, with the polyethylene surface in contact and an overlap of 15 mm were then positioned on the equilibrated base plate, the loading former was positioned and the 450 g weight applied (loading pressure 14.7 kN/m² (150 g cm²)) for 1 minute.

The load was removed, the sample removed from the oven and left to cool in air.

Subsequent tests indicated that the bonding temperature reached a maximum of 230°C due to contact with the base of the oven.

The oven was set at an air temperature of 200°C. A wire loop was attached to one end of each of the test samples. A sample was then suspended in the oven, near to the bulb of the thermometer, and left for 5 minutes. Test loads in the range 30 to 450 g were then applied to the samples and the time for the bond to fail noted.

Peel test

Strips 20 mm wide and 150 mm in length were prepared. The mid position along the length axis was marked together with points 15 mm either side. The strip was folded at the centre point to form a "V" and the two outer marks to define the contact area. Finally the fold at the base of the "V" was cut away.

Samples were prepared by this method at bonding temperatures 135°C and 230°C with the samples held under various loads for 1 minute or 5 minutes as the case may be. The loading procedure was the same as for the shear test.

Cooking test

Samples of the board were folded, coated side in, to form an open topped tray measuring 120 mm long by 80 mm wide by 20 mm high and the corners heat-sealed under pressure by holding for 1 minute at 200°C. A quantity of minced beef was placed in each tray and it was heated for 110 minutes in an ordinary radiant oven at a nominal temperature of 200°C.

The results of the shear test and peel test are given in a table at the end of description. In the cooking test, both irradiated samples survived without significant deformation or leaking; the corners of the non-irradiated tray partly collapsed and leakage of the content occurred.

The invention includes a method of cooking food comprising heating it while contained in packages made by the method described to a temperature higher than the softening-point of the polyethylene before cross-linking, and food cooked by the method.

Shear and peel test results

| Test method | Bonding at 14.7 kN/m² | | Radiation dose MRad | Test | |
| | °C. | s | | Load N | Fail time s |
|---|---|---|---|---|---|
| Shear | | | 0 | 0.65 | 250 |
| | | | 0 | 1.16 | 80 |
| | 230 | 60 | 0 | 1.67 | 50 |
| | | | 20 | 0.65 | >4200 |
| | | | 20 | 4.4 | 420—600 |
| Peel | | | 0 | 0.32 | 135 |
| | | | 0 | 0.49 | 45 |
| | 230 | 60 | 0 | 0.65 | 3.5 |
| | | | 20 | 0.65 | 350 |
| | | | 20 | 1.16 | 165 |
| | | 60 | 0 | 0.32 | 15 |
| | | 300 | 0 | 0.32 | 17 |
| | | 60 | 0 | 0.65 | <1 |
| | 135 | 300 | 0 | 0.65 | 5 |
| | | 60 | 20 | 0.65 | 130 |
| | | 300 | 20 | 0.65 | 130 |
| | | 60 | 30 | 0.65 | 360 |
| | | 300 | 30 | 0.65 | 300* |

* After 300s bond had parted over 90 percent of initial bond area. Further loading fractured the coating-to-board bond.

## Claims

1. A method of making a food package comprising coating paper board on at least one side with polyethylene to a weight not greater than 100 g/m², irradiating the coating with electrons after coating to give a degree of cross-linking corresponding to irradiation of polyethylene without any sensitiser to a dose, averaged over the thickness of the coating, in the range 5—50 Mrad, forming the food package wholly or in part from the coated board, and in doing so forming a heat-seal after irradiation to bond together two coated areas of the board.

2. A method in accordance with Claim 1 characterised by using polyethylene that is free of any additives.

3. A method as claimed in Claim 1 or Claim 2 characterised in that the radiation dose at the polyethylene/board interface is half as great as that at the surface of the polyethylene.

4. A method as claimed in any one of the preceding claims comprising irradiating the polyethylene coated paper board with high energy electrons characterised in that the electrons impinge on the coated surface of the laminate at glancing incidence.

5. A method of cooking food characterised by heating it while contained in a package made by the method claimed in any one of Claims 1—3 wherein the cooking temperature is higher than the softening point of the polyethylene before cross-linking.

6. Food cooked by the method claimed in Claim 5.

## Revendications

1. Procédé de fabrication d'un emballage pour produits alimentaires, consistant à revêtir du carton sur au moins un de ses côtés avec du polyéthylène jusqu'à un poids ne dépassant pas 100 g/m², à irradier le revêtement avec des électrons après le revêtement pour lui donner un degré de réticulation correspondant à une irradiation du polyéthylène exempt de tout sensibilisateur jusqu'à une dose ayant une valeur moyenne sur toute l'épaisseur du revêtement de l'ordre de 5—50 Mrad, à former l'emballage pour produits alimentaires complètement ou partiellement à partir du carton revêtu, et en procédant de la sorte à former un scellement à chaud après irradiation pour unir l'une à l'autre deux zones revêtues du carton.

2. Procédé suivant la revendication 1, caractérisé par le fait que l'on utilise du polyéthylène qui est exempt de tout additif.

3. Procédé suivant les revendications 1 ou 2, caractérisé par le fait que la dose de radiation à l'endroit de la face polyéthylène/carton à une valeur égale à la moitié de celle à l'endroit de la surface du polyéthylène.

4. Procédé suivant l'une quelconque des revendications précédentes consistant à irradier le carton revêtu de polyéthylène avec des électrons à haute énergie, caractérisé par le fait que les électrons heurtent obliquement la surface revêtue du stratifié.

5. Procédé de cuisson d'aliments caractérisé par le fait que l'on chauffe les aliments pendant qu'ils sont contenus dans un emballage réalisé à l'aide du procédé suivant l'une quelconque des revendications 1 à 3, la température de cuisson étant supérieure au point de ramollissement du polyéthylène avant sa réticulation.

6. Aliments cuits à l'aide du procédé suivant la revendication 5.

## Patentansprüche

1. Verfahren zum Herstellen einer Nahrungsmittelverpackung durch Beschichten von Karton auf mindestens einer Seite mit Polyäthylen bis zu einem Gewicht von höchstens 100 g/m², Bestrahlen der Beschichtung mit Elektronen nach dem Beschichten, so daß man einen Vernetzungsgrad entsprechend einer Bestrahlung von Polyäthylen ohne jeglichen Sensibilisator erhält, bis zu einer Dosis, gemessen über die Dicke der Beschichtung, im Bereich von 5 bis 50 Mrd, Ausbilden der Nahrungsmittelverpackung vollständig oder teilweise aus dem beschichteten Karton und dabei Ausbilden einer Heißsiegelung nach dem Bestrahlen, um zwei beschichtete Kartonflächen miteinander zu verbinden.

2. Verfahren nach Anspruch 1, dadurch gekennzeichnet, daß das verwendete Polyäthylen frei von jeglichen Zusätzen ist.

3. Verfahren nach Anspruch 1 oder 2, dadurch gekennzeichnet, daß die Strahlungsdosis an der Polyäthylen/Karton-Grenzfläche halb so groß ist wie die an der Oberfläche des Polyäthylens.

4. Verfahren nach einem der Vorstehenden Ansprüche, wobei der mit Polyäthylen beschichtete Karton mit hochenergetischen Elektronen bestrahlt wird, dadurch gekennzeichnet, daß die auf der beschichteten Oberfläche des Laminats auftreffenden Elektronen streifend einfallen.

5. Verfahren zum Kochen von Nahrungsmitteln, dadurch gekennzeichnet, daß das Nahrungsmittel in einer nach dem Verfahren gemäß einem der Ansprüche 1 bis 3 hergestellten Verpackung erhitzt wird und daß die Kochtemperatur höher liegt als der Erweichungspunkt des Polyäthylens vor dem Vernetzen.

6. Nahrungsmittel, gekocht nach dem Verfahren nach Anspruch 5.

Fig.2

Fig.1